# EUROPÄISCHE PATENTSCHRIFT

(11) **EP 1 854 857 B1**
(45) Veröffentlichungstag und Bekanntmachung des Hinweises auf die Patenterteilung: **17.04.2013**
(21) Anmeldenummer: 07108026.1
(22) Anmeldetag: 11.05.2007
(51) Int. Cl.: C09J 131/04

(54) **Wässrige Klebstoff-bzw. Beschichtungsformulierungen**
Aqueous adhesive and coating formulations
Formulations aqueuses pour adhesif et revêtement

(30) Priorität: 11.05.2006 DE 102006021875
(43) Veröffentlichungstag der Anmeldung: 14.11.2007
(73) Patentinhaber: Akzo Nobel Chemicals International B.V., 3811 MH Amersfoort (NL)
(72) Erfinder: Pantke, Dietrich Dr., 40882, Ratingen (DE); Kirchmeyer, Stefan Dr. H.C. Starck GmbH & Co. KG, 51375, Leverkusen (DE); Musch, Rüdiger Dr., 51467, Bergisch Gladbach (DE); Panskus, Knud, 51375, Leverkusen (DE)
(74) Vertreter: Akzo Nobel IP Department

(56) Entgegenhaltungen:
- GB-A- 1 144 767
- US-A- 3 738 957
- US-A- 3 883 489
- US-A- 4 481 328
- US-A- 5 118 727

## Beschreibung

Die Erfindung betrifft die verwendung wässriger Polymer-Dispersionen auf Basis von Polvinylacetat und/oder Polyvinylacetat-Copolymeren und Siliciumdioxid.

Für den Einsatz von Polymer-Dispersionen im Klebstoff- bzw. Beschichtungssektor standen in der Vergangenheit vorwiegend lösemittelhaltige Formulierungen zur Verfügung.

Aus ökologischen Gründen besteht jedoch ein wachsender Bedarf an geeigneten wässrigen Polymer-Dispersionen, die sich zu entsprechenden wässrigen Beschichtungs- oder Klebstoff-Formulierungen verarbeiten lassen. Solche Dispersionen sind beispielsweise auf Basis von Polyvinylacetat bekannt (vgl. Merkblatt TKH-3 "Dispersions-Holzleime" Ausgabe 2004, vom Industrieverband Klebstoffe eV, Düsseldorf (www.klebstoffe.com)). Derartige Systeme haben den Nachteil, dass die Schichten nach dem Auftrag getrocknet werden müssen (offene Zeit). Bei Klebstoffen versteht man unter der "offenen Zeit" nach DIN 16920 die Zeitspanne nach dem Klebstoffauftrag, innerhalb der ein Nasskleben möglich ist. Dies ist die Zeit vom Auftrag des Klebstoffs bis zum Einsetzen des Pressdrucks. Die Dauer des Pressdrucks bis zum Erreichen einer ausreichenden Anfangsfestigkeit hängt von zahlreichen Faktoren wie z.B. Auftragstärke, Saugfähigkeit des Substrates, Temperatur beim Zusammenfügen der zu verklebenden Substrate oder Luftfeuchtigkeit ab. Generell ist die Abbindegeschwindigkeit bei wässrigen Klebstoffformulierungen langsam und die Filmbildungstemperatur je nach Polymer-Typ auf Temperaturen >0 bis >15°C beschränkt. Wichtige Kenngrößen für solche Formulierungen sind daher die offene Zeit, Abbindegeschwindigkeit und Topfzeit der Dispersionen, sowie Wasserfestigkeit, Wärmebeständigkeit der resultierenden trockenen Beschichtungs- oder Klebstoff-Filme. Unter der "Topfzeit" versteht man die Zeit, innerhalb der man die Formulierung nach dem Einmischen der zweiten Dispersion verarbeiten kann. Nach dem Stand der Technik, (Ullmann, Encyklopädie der technischen Chemie Bd. 14, 4. Auflage, S. 250) lässt sich durch Zusatz von Lösemitteln und/oder Weichmachern die Abbindegeschwindigkeit beschleunigen und die Filmbildungstemperatur absenken. Durch diese Maßnahme wird jedoch der Wärmestand der Beschichtung bzw. der Klebstoffnaht reduziert. Einen höheren Wärmestand kann man durch Zusatz einer zweiten Dispersion auf der Basis von Resorcin- oder Melaminharz oder anorganische Salzen wie z.B. Chromnitrat erreichen. Diese Zwei-Komponenten-Dispersions-formulierungen sind jedoch in ihrer "Topfzeit" auf einige Stunden beschränkt.

Beschichtungen bzw. Verklebungen mit hoher Wasserfestigkeit und Wärmebeständigkeit erhält man durch das sogenannte "EPI System" (**E**mulsion-**P**olymer-**I**socyanat). Erreicht wird dies durch Zusatz von ca. 15% Isocyanat - meist MDI (Diphenylmethan- 4, 4'-Diisocyanat) - zur Polymer-Dispersion. Aufgrund der sehr kurzen Topfzeit ist hier nur ein maschineller Auftrag der Zwei-Komponenten-Formulierung (2K-Formulierung) möglich.

Darüber hinaus werden bei diesen 2K-Formulierungen verschiedene Metallsalz-Vernetzer als ätzend oder brandfördernd eingestuft. Bei isocyanat-basierenden Vernetzern sind - abhängig vom Isocyanattyp - ihre Reizwirkung und ihr sensibilisierendes Potential auf Haut und Atemwege zu berücksichtigen. (vgl. Merkblatt TKH-3 "Dispersions-Holzleime" Ausgabe 2004, vom Industrieverband Klebstoffe eV, Düsseldorf (www.klebstoffe.com)).

Es bestand somit weiterhin Bedarf an wässrigen Polymer-Dispersionen, welche die vorher beschriebenen Nachteile nicht aufweisen.

Der vorliegenden Erfindung lag somit die Aufgabe zugrunde, wässrige Polymer-Dispersionen bereitzustellen, die nach der Applikation auf den zu beschichtenden oder verklebenden Substraten eine schnelle Abbindung und hohe Anfangsfestigkeit aufweisen und die resultierenden trockenen Beschichtungs- oder Klebstoff-Filme eine hohe Wasserfestigkeit und Wärmebeständigkeit aufweisen.

Überraschend wurde gefunden, dass bei Dispersionen auf Basis von Polyvinylacetat oder Polyvinylacetatcopolymeren durch die Kombination mit wässrigen Siliciumdioxid-Dispersionen Polymer-Dispersionen erhalten werden, die schon bei Raumtemperatur im noch feuchten Zustand in kurzer offener Zeit Substrate verkleben bzw. beschichten können. Die resultierenden Beschichtungen bzw. Klebstoff-Filme zeigen überraschend hohe Anfangsfestigkeiten sowie Wasserfestigkeit und Wärmebeständigkeit im trockenen Zustand.

Aus dem Stand der Technik ist der Einsatz von Kieselsäure-Produkten für unterschiedliche Anwendungen bekannt. Während feste SiO₂-Produkte vielfach zur Steuerung rheologischer Eigenschaften, als Füllstoffe oder Adsorbentien eingesetzt werden, dominiert bei Siliciumdioxid-Dispersionen (beispielsweise Kieselsole) die Anwendung als Bindemittel diverser anorganischer Materialien, als Poliermittel von Halbleitern oder als Flockungspartner in kolloidchemischen Reaktionen. Beispielsweise wird in EP-A 0 332 928 der Einsatz von Polychloropren-Latices in Gegenwart von Kieselsolen als Imprägnierschicht bei der Herstellung von Brandschutzelementen offenbart. In FR-A 2 341 537 und FR-A 2 210 699 werden pyrogene Kieselsäuren in Kombination mit Polychloroprenlatices zur Herstellung flammfester Schaumzurichtungen oder zur Bitumenvergütung und in der JP-A 06 256 738 in Kombination mit Chloropren-Acrylsäure-Copolymeren beschrieben. Der Stand der Technik beschreibt jedoch an keiner Stelle Mischungen von Polyvinylacetat-Dispersionen mit Siliciumdioxid-Dispersionen und deren verbesserte Eigenschaften als Beschichtungsmittel oder Klebstoffe.

Gegenstand der vorliegenden Erfindung ist somit die Verwendung von wässrigen Polymer-Dispersionen als Klebstoffe, dadurch gekennzeichnet, dass sie
(a) mindestens eine Dispersion enthaltend Polyvinylacetat und/oder wenigstens ein Polyvinylacetatcopolymer und
(b) mindestens eine wässrige Siliciumdioxid-Dispersion mit einem mittleren Partikeldurchmesser der SiO₂-Partikel von 1 bis 400 nm und
(c) ein OH-gruppenhaltiges Oligomer oder Polymer gemäß Anspruch 1 enthält.

Unter dem Begriff "wässrig" ist im Rahmen der Erfindung zu verstehen, dass die Dispersionen im Wesentlichen, d.h. zu mindestens 30 Gew.-% - bezogen auf das Gesamtgewicht der Dispersion - Wasser enthalten.

Geeignete Polyvinylacetate bzw. Polyvinylacetatcopolymere sind kommerziell erhältlich. Als Anbieter seinen beispielhaft genannt die Firmen "Air Products" (Airflex®, Vinac®), "Celanese" (Mowilith®) und "Wacker" (Vinnapas®).

Die Polymerisation von Vinylacetat allein oder in Kombination mit anderen Monomeren ist seit langem bekannt und in zahlreichen Veröffentlichungen beschrieben worden, wie z.B. von H. Bartl, in Methoden der organischen Chemie (Houben-Weyl) Band XIV / 1 Makromolekulare Stoffe Thieme Verlag Stuttgart, 4. Auflage, 1961, S. 905 f.. Neben der Substanz-, Lösungs- und Suspensions-Polymerisation wird im technischen Maßstab die Emulsionspolymerisation bevorzugt, wobei als Vinylester überwiegend der Essigsäurevinylester eingesetzt wird.

Die Copolymerisation gelingt mit anderen Vinylverbindungen wie z.B. Vinylchlorid, Ethylen und höheren Vinylestern wie Vinylbenzoat, sowie mit Acrylestern und ungesättigten Dicarbonsäuren wie Maleinsäureanhydrid oder Acrylsäure. Dadurch lassen sich z.B. Löslichkeit, Verarbeitbarkeit, Anfärbbarkeit, Haftung oder Stabilität der Emulsion verbessern. Besonders geeignet sind Polyvinylacetat-Homopolymerisate oder -Copolymerisate mit Ethylen.

Wässrige Siliciumdioxid-Dispersionen sind seit langem bekannt. Je nach Herstellprozess liegen sie in unterschiedlichen Formen vor.

Erfindungsgemäß geeignete Siliciumdioxid-Dispersionen (b) können auf Basis von Kieselsol, Kieselgel, pyrogenen Kieselsäuren, Fällungskieselsäuren oder Mischungen der genannten erhalten werden.

Kieselsäuresole sind kolloidale Lösungen von amorphem Siliciumdioxid in Wasser, die auch als Siliciumdioxidsole meist aber kurz als Kieselsole bezeichnet werden. Das Siliciumdioxid liegt dabei in Form von kugelförmigen und an der Oberfläche hydroxilierten Partikeln vor. Der Partikeldurchmesser der Kolloidteilchen beträgt in der Regel 1 bis 200 nm, wobei die zur Teilchengröße korrelierende spezifische BET-Oberfläche (bestimmt nach der Methode von G.N. Sears, Analytical Chemistry Vol. 28, N. 12, 1981-1983, Dezember 1956) bei 15 bis 2000 m²/g liegt. Die Oberfläche der SiO₂-Teilchen weist eine Ladung auf, die durch ein entsprechendes Gegenion ausgeglichen wird, das zur Stabilisierung der kolloidalen Lösung führt. Die alkalisch stabilisierten Kieselsole besitzen einen pH-Wert von 7 bis 11,5 und enthalten als Alkalisierungsmittel beispielsweise geringe Mengen Na₂O, K₂O, Li₂O, Ammoniak, organische Stickstoffbasen, Tetraalkylammoniumhydroxide oder Alkali- oder Ammoniumaluminate. Kieselsole können auch als metastabile kolloidale Lösungen schwach sauer vorliegen. Ferner ist es möglich, durch Beschichtung der Oberfläche mit Al₂(OH)₅Cl kationisch eingestellte Kieselsole herzustellen. Die Feststoff-Konzentrationen der Kieselsole liegen bevorzugt bei 5 bis 60 Gew.-% SiO₂.

Der Herstellprozess für Kieselsole durchläuft im wesentlichen die Produktionsschritte Entalkalisierung von Wasserglas mittels Ionenaustausch, Einstellung und Stabilisierung der jeweils gewünschten Teilchengrößen(verteilung) der SiO₂-Partikel, Einstellung der jeweils gewünschten SiO₂-Konzentration und gegebenenfalls einer Oberflächenmodifikation der SiO₂-Partikel, wie beispielsweise mit Al₂(OH)₅Cl. In keinem dieser Schritte verlassen die SiO₂-Partikel den kolloidal gelösten Zustand. Dadurch erklärt sich das Vorliegen der diskreten Primärpartikel.

Unter Kieselgelen versteht man kolloidal geformte oder ungeformte Kieselsäuren von elastischer bis fester Konsistenz mit lockerer bis dichter Porenstruktur. Die Kieselsäure liegt in Form von hochkondensierter Polykieselsäure vor. Auf der Oberfläche befinden sich Siloxan und/oder SilanolGruppen. Die Herstellung der Kieselgele erfolgt aus Wasserglas durch Umsetzung mit Mineralsäuren.

Des Weiteren wird zwischen pyrogener Kieselsäure und Fällungskieselsäure unterschieden. Beim Fällungsverfahren wird Wasser vorgelegt und anschließend Wasserglas und Säure, wie H₂SO₄, simultan zugegeben. Dabei entstehen kolloidale Primärteilchen, die mit fortschreitender Reaktion agglomerieren und zu Agglomeraten verwachsen. Die spezifische Oberfläche liegt in der Regel bei 30 bis 800 m²/g und die Primärpartikelgröße bei 5 bis 100 nm. Die Primärpartikel von diesen als Feststoff vorliegenden Kieselsäuren sind in der Regel zu Sekundäragglomeraten fest vernetzt. Die vorangehend angegebene sowie im Folgenden genannte(n) spezifische(n) Oberfläche(n) werden gemäß DIN 66131 gemessen.

Pyrogene Kieselsäure kann durch Flammenhydrolyse oder mit Hilfe des Lichtbogenverfahrens hergestellt werden. Das dominierende Syntheseverfahren für pyrogene Kieselsäuren ist die Flammenhydrolyse, bei der Tetrachlorsilan in einer Knallgasflamme zersetzt wird. Die dabei gebildete Kieselsäure ist röntgenamorph. Pyrogene Kieselsäuren besitzen an ihrer nahezu porenfreien Oberfläche deutlich weniger OH-Gruppen als Fällungskieselsäure. Die über Flammhydrolyse hergestellte pyrogenen Kieselsäure hat in der Regel eine spezifische Oberfläche von 50 bis 600 m²/g und eine Primärpartikelgröße von 5 bis 50 nm, die über das Lichtbogenverfahren hergestellte Kieselsäure eine spezifischen Oberfläche von 25 bis 300 m²/g und eine Primärpartikelgröße von 5 bis 500 nm.

Weitere Angaben zu Synthese und Eigenschaften von Kieselsäuren in fester Form sind beispielsweise K.H. Büchel, H.-H. Moretto, P. Woditsch "Industrielle Anorganische Chemie", Wiley VCH Verlag 1999, Kap. 5.8 zu entnehmen.

Werden für die erfindungsgemäße Polymer-Dispersion ein als isolierter Feststoff vorliegender SiO₂-Rohstoff, wie beispielsweise pyrogene oder gefällte Kieselsäure, eingesetzt, so wird dieser in eine wässrige SiO₂-Dispersion durch Dispergieren überführt.

Zur Herstellung der Siliciumdioxid-Dispersionen werden Dispergatoren des Standes der Technik eingesetzt, bevorzugt solche, die zur Erzeugung hoher Scherraten geeignet sind, wie z.B. Ultratorrax oder Dissolverscheiben.

Bevorzugt werden solche wässrigen Siliciumdioxid-Dispersionen (b) eingesetzt, deren SiO₂-Partikel eine Primärpartikelgröße von 1 bis 400 nm, bevorzugt 5 bis 100 nm und besonders bevorzugt 8 bis 60 nm aufweisen. Für den Fall, dass gefällte Kieselsäuren eingesetzt werden, werden diese zwecks Teilchenverkleinerung gemahlen.

Bevorzugte erfindungsgemäße Polymer-Dispersionen sind solche, in denen die SiO₂-Partik der Siliciumdioxid-Dispersion (b) als diskrete unvernetzte Primärpartikel vorliegen.

Es ist ebenfalls bevorzugt, dass die SiO₂-Partikel über Hydroxylgruppen an der Partikel-Oberfläche verfügen.

Besonders bevorzugt werden als wässrige Siliciumdioxid-Dispersionen wässrige Kieselsäuresole eingesetzt. Geeignete Kieselsäuresole sind unter anderem auch kommerziell erhältlich.

Unter OH-gruppenhaltigen Oligomeren oder Polymeren sind im Rahmen der Erfindung alle linearen oder cyclischen Oligomere oder Polymere zu verstehen, die in der Oligomer- oder Polymerkette Hydroxylgruppen enthalten und entweder als wässrige Dispersion vorliegen oder wasserlöslich sind. Unter Oligomeren sind im Rahmen der Erfindung solche Verbindungen mit bis zu 10 Wiederholungseinheiten zu verstehen, unter Polymeren solche mit mehr als 10 Wiederholungseinheiten, wobei in beiden Fällen die Wiederholungseinheiten gleich oder verschieden sein können. Bevorzugte Beispiele für OH-gruppenhaltige Polymere sind Hydroxylacrylate, Hydroxylalkylcellulosen, hydroxylgruppenhaltige Polychloroprene oder Polyvinylalkohole; bevorzugte Beispiele für OH-gruppenhaltige Oligomere sind Cyclodextrine. Bevorzugte OH-gruppenhaltige Oligomere oder Polymere sind im Rahmen der Erfindung Cyclodextrine.

Geeignete Cyclodextrine sind unsubstituierte und substituierte Cyclodextrine.

Bevorzugte Cyclodextrine sind α-, β- und γ-Cyclodextrine und deren Ester-, Alkylether-, Hydroxyalkylether-, Alkoxycarbonylalkylether-, Carboxyalkylether-Derivate oder deren Salze.

Besonders bevorzugt sind Methyl-α-cyclodextrin, Methyl-β-cyclodextrin, Methyl-γ-cyclodextrin, Ethyl-β-cyclodextrin, Butyl-α-cyclodextrin, Butyl-β-cyclodextrin, Butyl-γ-cyclodextrin, 2,6-Dimeihyl-α-cyclodextrin, 2,6-Dimethyl-β-cyclodextrin, 2,6-Dimethyl-γ-cyclodextrin, 2,6-Diethyl-β-cyclodextrin, 2,6-Dibutyl-β-cyclodextrin, 2,3,6-Trimethyl-α-cyclodextrin, 2,3,6-Trimethyl-β-cyclodextrin, 2,3,6-Trimethyt-γ-cyclodextrin, 2,3,6-Trioetyl-α-cyclodextrin, 2,3,6-Trioetyl-β-cyclodextrin, 2,3,6-Triacetyl-α-cyclodextrin, 2,3,6-Triacetyl-β-cyclodextrin, 2,3,6-Triacetyl-γ-cyclodextrin, (2-Hydroxy)propyl-α-cyclodextrin, (2-Hydroxy)propyl-β-cyclodextrin, (2-Hydroxy)propyl-γ-cyclodextrin, teilweise oder vollständig acetyliertes, methyliertes und succinyliertes α-, β- und γ-Cyclodextrin, 2,6-Dimethyl-3-acetyl-β-eyclodextrin und 2,6-Dibutyl-3-acetyl-β-cyclodextrin.

Die Mono-, Di- oder Triether-substituierten, Mono-, Di- oder Triester-substituierten oder Monoester/-diether substituierten Derivate werden in der Regel durch Veretherung von α-, β- und γ -Cyclodextrinen mit Alkylierungsmitteln wie beispielsweise Dimethylsulfat oder Alkylhalogeniden mit 1 bis 30 C-Atomen wie beispielsweise Methyl-, Ethyl-, Propyl-, Butyl-, Pentyl-, Hexyl-, Heptyl-, Octylchlorid, -bromid oder -iodid und/oder Veresterung mit Essigsäure oder Bernsteinsäure in Gegenwart von Säuren erhalten.

Cyclodextrine sind ebenfalls kommerziell erhältlich, beispielsweise bei der Firma Wacker (Cavamax®).

Die erfindungsgemäßen Dispersionen besitzen bevorzugt einen Gehalt an dispergierten Polymeren von 30 bis 70 Gew.-%. Der Gesamtanteil der dispergierten Polymeren (a) und (c) liegt bei 55 bis 96 Gew.-% und der der Siliciumdioxid-Dispersion (b) bei 4 bis 20 Gew.-%, wobei sich die Prozentangaben auf das Gewicht nichtflüchtiger Anteile beziehen und zu 100 Gew.-% addieren. Ganz besonder bevorzugt sind solche erfindungsgemäßen Dispersionen, worin der Gesamtanteil der dispergierten Polymeren (a) und (c) bei 80 Gew.-% bis 96 Gew.-% und der der Siliciumdioxid-Dispersion bei 20 Gew.-% bis 4 Gew.-% liegt, wobei sich die Prozentangaben auf das Gewicht nichtflüchtiger Anteile beziehen und zu 100 Gew.-% addieren.

Der Gesamtanteil der dispergierten Polymeren (a) und (c) teilt sich derart auf, dass er zu 70 Gew.-% bis 100 Gew.-% aus Polyvinylacetat (a) und zu 0 bis 30 Gew.-% aus OH-gruppenhaltigen Polymer-Dispersionen (c).

Die erfindungsgemäßen Dispersionen können gegebenenfalls auch andere Dispersionen wie z.B. Polyacrylat-, Polyvinylidenchlorid-, Polybutadien-, oder Styrol-Butadien-Dispersionen in einem Anteil von bis zu 30 Gew.-% enthalten.

Die erfindungsgemäßen Dispersionen können weitere Zusatzmittel und gegebenenfalls Beschichtungs- und Klebstoffhilfsstoffe enthalten:
Beispielsweise können Füllstoffe wie Quarzmehl, Quarzsand, Schwerspat, Calciumcarbonat, Kreide, Dolomit oder Talkum, gegebenenfalls zusammen mit Netzmitteln, beispielsweise Polyphosphaten, wie Natriumhexametaphosphat, Naphthalinsulfonsäure, Ammonium- oder Natriumpolyacryl-Säuresalze zugesetzt werden, wobei die Füllstoffe in Mengen von 10 bis 60 Gew.-%, bevorzugt von 20 bis 50 Gew.-%, und die Netzmittel in Mengen von 0,2 bis 0,6 Gew. -%, alle Angaben bezogen auf die nichtflüchtigen Anteile, zugesetzt werden. Weitere geeignete, gegebenenfalls einzusetzende Hilfsmittel sind beispielsweise in Mengen von 0,01 bis 1 Gew.-%, bezogen auf nichtflüchtige Anteile, einzusetzende organische Verdickungsmittel, wie Cellulosederivate, Alginate, Stärke, Stärkederivate, Polyurethan-Verdickungsmittel oder Polyacrylsäure oder in Mengen von 0,05 bis 5 Gew.-%, bezogen auf nichtflüchtige Anteile, einzusetzende anorganische Verdickungsmittel, wie beispielsweise Bentonite. Zur Konservierung können der erfindungsgemäßen Dispersion auch Fungizide zugesetzt werden. Diese kommen in Mengen von 0,02 bis 1 Gew.-%, bezogen auf nichtflüchtige Anteile, zum Einsatz. Geeignete Fungizide sind beispielsweise Phenol- und Kresolderivate oder zinnorganische Verbindungen. Gegebenenfalls können auch klebrigmachende Harze, so genannte Klebharze, wie z.B. unmodifizierte oder modifizierte Naturharze wie Kollophoniumester, Kohlenwasserstoffharze oder synthetische Harze wie Phthalatharze der erfindungsgemäßen Polymer-Dispersion in dispergierter Form zugesetzt werden (siehe z.B. in "Klebharze" R. Jordan, R. Hinterwaldner, S. 75-115, Hinterwaldner Verlag München 1994). Bevorzugt sind Alkylphenolharz- und Terpenphenolharz-Dispersionen mit Erweichungspunkten größer 70 °C, besonders bevorzugt größer 110°C. Auch Weichmacher, wie beispielsweise solche auf Adipat-, Phthalat- oder Phosphatbasis können den erfindungsgemäßen Dispersionen in Mengen von 0,5 bis 10 Gew.-Teile, bezogen auf nichtflüchtige Anteile zugesetzt werden.

Ebenfalls möglich ist ein Einsatz organischer Lösungsmittel, wie beispielsweise aromatischer Kohlenwasserstoffe, wie z.B. Toluol oder Xylol, Ether, wie z.B. Dioxan, Ketone, wie z.B. Aceton, oder Methylethylketon, Ester, wie z.B. Butylacetat oder Ethylacetat, oder deren Gemische in Mengen von bis zu 10 Gew.-% bezogen auf das Gewicht der gesamten Klebstoff-Formulierung. Solche Zusätze organischer Lösungsmittel können beispielsweise die Haftung zum zu beschichtenden oder verklebenden Substrat verbessern oder der Lösung der vorangehend beschriebenen gegebenenfalls enthaltenen weiteren Zusatzmittel oder gegebenenfalls Beschichtungs- und Klebstoffhilfsstoffe dienen.

Zur Herstellung der erfindungsgemäßen Polymer-Dispersionen werden die Mengenverhältnisse der einzelnen Komponenten so gewählt, dass die resultierende erfindungsgemäße Dispersion die Komponenten (a), (b) und gegebenenfalls (c) sowie gegebenenfalls weitere Zusatzmittel oder Beschichtungs- oder Klebstoffhilfsstoffe in den vorangehend angegebenen Mengen enthält.

Die einzelnen Komponenten können grundsätzlich in beliebiger Reihenfolge zusammengegeben werden. In den bevorzugten Ausführungsformen enthaltend die OH-gruppenhaltige Komponente (c) ist eine Vorabmischung der wässrige Siliciumdioxid-Dispersion (b) mit dem oder den OH-gruppenhaltigen Oligomeren oder Polymeren (c), besonders vorteilhaft, wobei der Zusatz der Stoffe (c) als Dispersion oder bei Cyclodextrinen als Feststoff oder als wässrige Lösung erfolgt.

Die im Rahmen dieser bevorzugten Variante hergestellten wässrigen Zwischendispersionen aus wässriger Siliciumdioxid-Dispersion (b) mit dem oder den OH-gruppenhaltigen Oligomeren oder Polymeren (c) sind stabil und ebenfalls Gegenstand der vorliegenden Erfindung. Insbesondere sind dies Zwischendispersionen aus wässriger Siliciumdioxid-Dispersion (b) mit einem oder mehreren Cyclodenxtrin(en).

Die erfindungsgemäßen Dispersionen eignen sich hervorragend als Klebstoffe oder Beschichtungsmittel für diverse Substrate. Beispielsweise können Substrate wie Holz, Papier, Kunststoffe, Textilien, Leder, Gummi oder aus anorganischen Materialien wie Keramik, Steingut, Glasfaser oder Zement beschichtet oder verklebt werden. Beim Verkleben von Substraten können Substrate gleicher oder verschiedener Art verklebt werden. Die erfindungsgemäßen Polymer-Dispersionen zeigen gegenüber bekannten wässrigen Polymer-Dispersionen trotz des hohen Wassergehaltes eine schnelle Abbindung und hohe Anfangsfestigkeit und die resultierenden trockenen Beschichtungs- oder Klebstoff-Filme eine hohe Wasserfestigkeit und Wärmebeständigkeit

Weiterhin ist somit Gegenstand der vorliegenden Erfindung die Verwendung der erfindungsgemäßen Polymer-Dispersionen als Klebstoffe, beispielsweise in der Buchbinderei, bei der Holzverklebung, als Fliesenkleber oder als Beschichtungsmittel für Verpackungen.

Die Auftragung der erfindungsgemäßen Polymer-Dispersionen kann auf bekannte Weisen, z.B. durch Streichen, Gießen, Rakeln, Spritzen, Walzen oder Tauchen durchgeführt werden. Die Trocknung des Beschichtungs- bzw. Klebstofffilms kann bei Raumtemperatur oder erhöhter Temperatur erfolgen.

Ebenfalls Gegenstand der vorliegenden Erfindung sind Substrate die mit einer erfindungsgemäßen Polymer-Dispersion beschichtet oder verklebt sind.

Die folgenden Beispiele dienen der beispielhaften Erläuterung der Erfindung und sind nicht als Beschränkung aufzufassen.

### Beispiele

Im Folgenden werden die nachstehenden Abkürzungen verwendet:
VAc = Vinylacetat
PVAc = Polyvinylacetat
E = Ethylen
A = Acrylsäureester
OS = Oberflächenaktive Substanz
PVAL = Polyvinylalkohol
CD = Cellulosederivat

### 1.1. Eingesetzte Substanzen

**Tabelle 1: Polyvinylacetat Dispersionen der Firma Air Products (Vinac®-Reibe)**

| **Polyvinylacetat** | **1** | **2** | **3** | **4** |
|---|---|---|---|---|
| Bezeichnung | Vinac® DPN15 | Vinac® DP600*) | Vinac® DP55 | Vinac® DP500 |
| Monomerbausteine | Vac | Vac | Vac | Vac |
| Feststoffgehalt (%) | 52 | 60 | 55 | 50 |
| Viskosität (mPas) | 15000 +/- 3000 | 35000+/-10000 | 3000+/- 600 | 35000+/-10000 |
| pH Wert | 2,5-3,5 | 4-5 | 4-5 | 4-5 |
| Stabilisator | PVAI | PVAL | PVAL | PVAL |

| | | | | |
|---|---|---|---|---|
| *) frühere Bezeichnung: Vinac® H 60 | | | | |

**Tabelle 2: Polyvinylacetat Dispersionen der Firma Air Products (Airflex®-Reihe)**

| **Polyvinylacetat** | **5** | **6** | **7** | **8** |
|---|---|---|---|---|
| Bezeichnung | Airflex® EP17 | Airflex® EAF60 | Airflex® EP400 | Airflex® EZ3010 |
| Monomerbausteine | VAc/E | VAc/E/A | VAc*l*E | VAc/E |
| Feststoffgehalt (%) | 60 | 60 | 55 | 55 |
| Viskosität (mPas) | 3500+/- 1000 | 12000 +/- 4000 | 2400+/-400 | 4300+/-1600 |
| pH Wert | 4 - 5 | 4 - 5 | 4 - 5 | 4 - 5 |
| Stabilisator | PVAL | OS | PVAL | CD + OS |
| Einsatzgebiete (Angabe des Herstellers) | Do It Yourself, Verklebungen von Pappe, Kunststoff-Folien, Buchbinderei | Haftklebstoff, Fußbodenbelag | Verklebungen von Pappe, Kunst stoff-Folien, Buchbinderei, Schaumstoffe | Für emmisions-arme Innenfarben |

**Tabelle 3: Polyvinylacetat / Polyvinylalkohol - Dispersionen der Firma Celanese Emulsions GmbH Frankfurt, Deutschland**

| **Polyvinylacetat** | **9** |
|---|---|
| Bezeichnung | Mowilith® LDL 2555 W |
| Monomerbausteine | VAc |
| Feststoffgehalt(%) | 50 |
| Viskosität (mPas) | 12000 +/- 3000 |
| pH Wert | 3,15 +/- 0,35 |
| Glaspunkt (Tg in °C) | + 27 |
| Stabilisator | PVAL |
| Einsatzgebiete (Angabe des Herstellers) | wasserfeste Klebungen (Gruppe D3) für die Bereiche Holz, Möbel |

**Tabelle 4: Cyclodextrin der Firma Wacker Burghausen Deutschland**

| **Cyclodextrin** | **10** |
|---|---|
| Bezeichnung | Cavamax® W6 |
| Zusammensetzung | ά-Cyclodextrin (Cyclohexaamylase) |
| Feststoff, Gehalt an ά-Cyclodextrin (%) | 90 |
| CAS-Nr | 10016-20-3 |
| Molekulargewicht | 973 |

**Tabelle 5: Siliciumdioxid-Dispersionen (Kieselsole) der Firma H. C. Starck Leverkusen Deutschland**

| **Kieselsol** | **11** | **12** | **13** | **14** |
|---|---|---|---|---|
| Bezeichnung | Levasil® 50 | Levasil® 100 | Levasil® 200 | Levasil® 300 |
| Konzentration (%) | 50 | 45 | 40 | 30 |
| Dichte (g/cm³) | 1,39 | 1,343 | 1,295 | 1,208 |
| pH Wert | 9 | 10 | 9 | 10 |
| Spezifische Oberfläche (m² /g) | 50 | 100 | 200 | 300 |
| Mittlere Partikelgröße (nm) (*) | 55 | 30 | 15 | 9 |

| | | | | |
|---|---|---|---|---|
| (*) Mittelwerte, berechnet aus der spezifischen Oberfläche | | | | |

**Tabelle 6: Eingesetzte Hilfsstoffe**

| **Bezeichnung** | Desmodur® DN |
|---|---|
| Hersteller | Bayer Material Science, Leverkusen, Deutschland |
| Zusammensetzung | Hydrophiles aliphatisches Polyisocyanat auf Basis Hexamethylendiisocyanat (HDI) |
| Feststoff, Gehalt an Desmodur DN (%) | 100 |

### 1.2 Messmethoden:

### 1.2.1. Thermomechanische Analyse (TMA)

Die Dispersionen werden in einer Teflonschale als Film getrocknet und zwar 3 Tage bei Raumtemperatur, 1 Stunde bei 80°C und danach noch einmal 3 Tage bei Raumtemperatur, wobei ein Film mit einer Dicke von 1,0 mm bis 1,5 mm entstehen soll. Gemessen wird mit einem Gerät der Firma Perkin Elmer DMA 7 bei einer Belastung von 500 mN und einem Temperaturprogramm von-100°C bis +240°C, Steigerungsrate 5° / min. Gemessen wird die Eindringtiefe des Messkopfes bei der entsprechenden Temperatur. Je weicher der Film wird, umso tiefer dringt der Messkopf in das Substrat ein. Diese Messung korreliert mit der Ermittlung der Wärmebeständigkeit der Klebungen im Heizschrank.

Beispiel für eine solche Wärmebeständigkeitsprüfung: Die Prüfkörper werden mit 4 kg belastet und in einem Heizschrank innerhalb von 30 min. auf 40°C temperiert. Anschließend werden die Prüfkörper mit einer linearen Heizrate von 0,5°C/min. auf 150°C aufgeheizt. Die Erweichungstemperatur, d.h. die Temperatur in °C bei der die Klebung unter der 4 kg Last versagt, wird registriert.

### 1.2.2. Bestimmung der Filmbildungs- und Aushärtezeit von Klebstoff-Dispersionsfilmen.

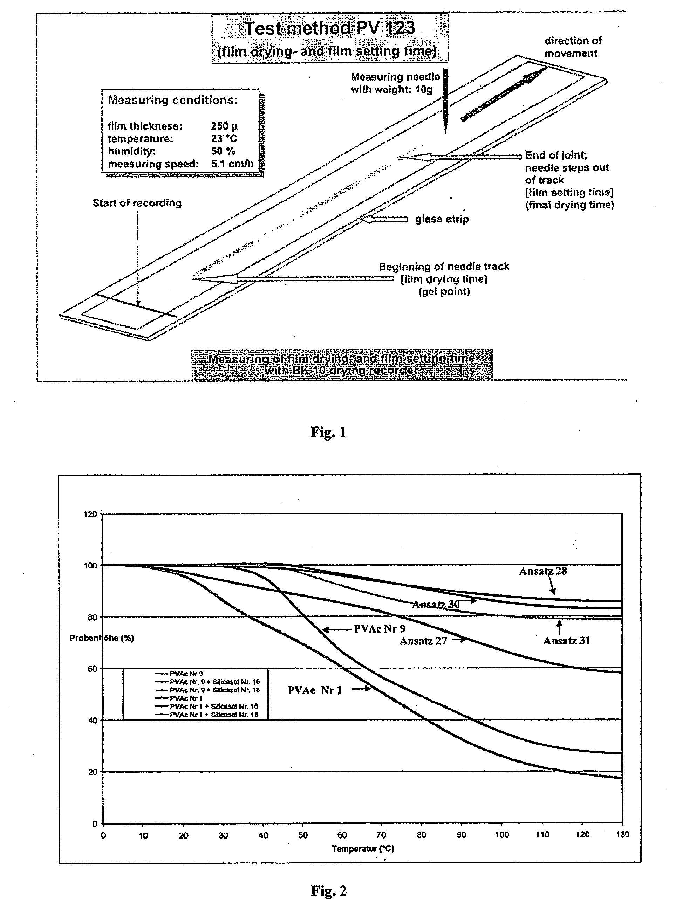

**Messprinzip (siehe auch** **Fig. 1****):** 2 Schlitten werden mit konstanter Geschwindigkeit über eine Glasplatte bewegt, auf der sich ein Klebstoff-Film befindet. An den Schlitten wird an einem beweglichen Arm eine Nadel senkrecht zur Glasplatte angebracht und mit einem Gewicht bestückt. Während der ersten Phase des Trocknungsprozesses fließt die Dispersion hinter der Nadel wieder zusammen. Der Beginn der Filmbildungszeit ist durch die Trennung des Films durch die Nadel definiert (Phase 2). Steigt die Viskosität des Films über die vertikale Kraft des Gewichtes an, so springt die Nadel aus dem Film und läuft auf der Filmoberfläche weiter (Phase 3). Dieser Zeitpunkt wird als Filmtrockenzeit definiert.

**Durchführung der Messung:** Die Glasplatte wird mit Ethylacetat gereinigt, der Klebstoff-Film mit einem 250 µm Rakel aufgetragen, die Nadel mit einem Gewicht von 10g belastet und die Messung gestartet. Die Geschwindigkeit betrug 5,1 cm / h. Die Messungen werden in einem Klimaraum bei 23°C und einer relativen Luftfeuchtigkeit von 50% durchgeführt.

**Fig.1****:** Messvorrichtung für die Bestimmung von Filmbildungs- und Filmtrocknungszeit

### 1.2.3. Bestimmung der Zugscherfestigkeit

Ermittlung der Scherfestigkeit von Holz-Holz Verklebungen bei Beanspruchung durch Zugkräfte in Richtung der Klebfläche.

**Material:** Buchenholz (40 x 20 x 4 mm)

### 1.2.3.1 Herstellung der Prüfkörper:

Die erfindungsgemäßen Klebstoffe werden auf eine gehobelte Buchenholzplatte (nach DIN 53-254) unter Verwendung eines Pinsels aufgetragen. Der Klebstoffauftrag erfolgt auf beiden Seiten des Buchenholzprüfkörpers. Nach einer Trocknungszeit von 30 Minuten bei Umgebungstemperatur wird eine zweite Klebstoffschicht über die erste aufgetragen und anschließend 60 Minuten bei Umgebungstemperatur getrocknet. Nach der Trocknungszeit werden die beiden Prüfkörper so verklebt, dass eine Überlappung von 20x10 mm entsteht. Die Prüfkörper werden dann in einer Presse 10 Sekunden bei einem Druck von 4 bar gepresst.

### 1.2.3.2. Bestimmung des Zugscherfestigkeit

Die Messung der Haftkraft erfolgte mittels der Stimabrissvorrichtung der Zugprüfmaschine der Fa. Zwick, Typ 1475 (Universalprüfmaschine, Standardprüfgerät in der Klebstofftechnik) mit einer Abzugsgeschwindigkeit von 100 mm/min bis zum Trennen der zusammengefügten (verklebten) Teile. Die Kraft wird in N/mm² angegeben.

### 1.2.4. Bestimmung der Wasserfestigkeit der Klebungen.

Die Prüfkörper werden an 7 Tagen zunächst jeweils 6 Stunden bei 100 °C und danach jeweils 2 Stunden in kaltem Wasser, anschließend bei RT gelagert, anschließend weitere 7 Tage bei RT.

Die Zugscherfestigkeit wird danach - wie in 1.2.3.2 beschrieben - bestimmt.

### 1.3. Herstellung der erfindungsgemäßen Polymer-Dispersionen

Für die Herstellung der erfindungsgemäßen Polymer-Dispersionen wird die Dispersion (a) enthaltend Polyvinylacetat und/oder wenigstens ein Polyvinylacetatcopolymer in einem Becherglas vorgelegt. Nacheinander wird dann die Siliciumdioxid-Dispersion (b) und die Dispersion enthaltend mindestens ein OH-gruppenhaltiges Oligomer oder Polymer (c) unter Rühren zugesetzt. Nach 30 Minuten wird die Formulierung für die Versuche verwendet.

Die Angaben in den Tabellen 7a - 13a sind Gewichtsteile der jeweiligen Dispersionen

### 1.4. Beispiele:

**Tab. 7a: Zusammensetzungen der Dispersionen**

| **Versuch** | **1*)** | **2** | **3** | **4** | **5*)** | **6** | **7** | **8** |
|---|---|---|---|---|---|---|---|---|
| PVAc Typ 1 | 100 | 100 | 100 | 100 | - | - | - | - |
| PVAc Typ 9 | - | - | - | - | 100 | 100 | 100 | 100 |
| Kieselsol Typ 11 | | 30 | | | | 30 | | |
| Kieselsol Typ 12 | | | 30 | | | | 30 | |
| Kieselsol Typ 13 | | | | 30 | | | | 30 |

**Tab. 7b: Zugscherfestigkeit von Klebungen nach Lagerung (Substrate. Holz/Holz)**

| **Versuch** | **1*)** | **2** | **3** | **4** | **5*)** | **6** | **7** | **8** |
|---|---|---|---|---|---|---|---|---|
| 1 Tag [N/mm] | 13,0 | 14,5 | 14,2 | 14,1 | 13,0 | 13,5 | 13,4 | 13,8 |
| 7 Tage [N/mm] | 14,4 | 18,2 | 17,6 | 17,7 | 12,8 | 14,2 | 17,6 | 16,8 |
| 14 Tage [N/mm] | 14,0 | 18,0 | 17,2 | 17,4 | 14,1 | 15,7 | 17,2 | 17,3 |

| | | | | | | | | |
|---|---|---|---|---|---|---|---|---|
| *) Vergleichsbeispiele | | | | | | | | |

**Tab. 8a: Zusammensetzungen der Dispersionen**

| **Versuch** | **9*)** | **10** | **11** | **12*)** | **13** | **14** |
|---|---|---|---|---|---|---|
| PVAc Typ 5 | 100 | 100 | 100 | - | - | - |
| PVAc Typ 6 | - | - | - | 100 | 100 | 100 |
| Kieselsol Typ 13 | | 30 | | | 30 | |
| Kieselsol Typ 14 | | | 30 | | | 30 |

**Tab. 8b: Zugscherfestigkeit von Klebungen nach Lagerung (Substrate. Holz/Holz)**

| **Versuch** | **9*)** | **10** | **11** | **12*)** | **13** | **14** |
|---|---|---|---|---|---|---|
| 1 Tag [N/mm] | 4,6 | 5,9 | 6,8 | 1,4 | 2,4 | 1,9 |
| 7 Tage [N/mm] | 5,2 | 6,6 | 7,7 | 1,3 | 2,7 | 2,1 |
| 14 Tage [N/mm] | 5,0 | 7,4 | 8,9 | 1,2 | 2,6 | 2,4 |

| | | | | | | |
|---|---|---|---|---|---|---|
| *) Vergleichsbeispiele | | | | | | |

Gegenüber der Verwendung von reinen Polyvinylacetat-Dispersionen gemäß Vergleichsbeispielen 1, 5, 9 und 12 zeigen die mit den erfindungsgemäßen Polymer-Dispersionen verklebten Substrate deutlich höhere Scherfestigkeiten.

**Tab. 9a: Zusammensetzung der Dispersionen**

| **Versuch** | **15*)** | **16** | **17** | **18** | **19** |
|---|---|---|---|---|---|
| PVAc Typ 1 | 100 | 100 | 100 | 100 | 100 |
| Vernetzer Desmodur® DN | - | 5 | - | - | - |
| Kieselsol Typ 11 | | | 30 | | |
| Kieselsol Typ 12 | | | | 30 | |
| Kieselsol Typ 13 | | | | | 30 |

**Tab. 9b : Wasserfestigkeit von Klebungen (Substrate: Holz/Holz)**

| **Versuch** | **15*)** | **16** | **17** | **18** | **19** |
|---|---|---|---|---|---|
| Zugscherfestigkeit nach Wasserlagerung [N/mm] | 14,3 | 16,1 | 15,4 | 16,8 | 16,3 |

| | | | | | |
|---|---|---|---|---|---|
| *) Vergleichsbeispiel | | | | | |

Gegenüber der Verwendung der reinen Polyvinylacetat-Dispersion gemäß Vergleichsbeispiel 15 zeigen die mit den erfindungsgemäßen Polymer-Dispersionen verklebten Substrate deutlich höhere Scherfestigkeiten nach Wasserlagerung und damit höhere Wasserbeständigkeit. Der Einsatz des Vernetzers Desmodur DN zur Erzielung einer höheren Festigkeit ist nicht nötig.

**Tab. 10a: Zusammensetzung der Dispersionen**

| **Versuch** | **20*)** | **21** | **22** | **23** | **24** | **25** |
|---|---|---|---|---|---|---|
| PVAc Typ 1 | 100 | 100 | 100 | - | - | - |
| PVAc Typ 9 | - | - | - | 100 | 100 | 100 |
| Kieselsol Typ 12 | | 30 | | | 30 | |
| Kieselsol Typ 13 | | | 30 | | | 30 |

**Tab. 10b: Angabe der Filmbildungs- und Filmtrocknungszeit entsprechend Testmethode 1.2.2**

| **Versuch** | **20*)** | **21** | **22** | **23** | **24** | **25** |
|---|---|---|---|---|---|---|
| Filmbildungszeit (min) | 8,0 | <1 | <1 | 8,4 | <1 | 3,2 |
| Filmtrocknungszeit (min) | 29 | 5,2 | 5,6 | 26,8 | 5,4 | 7,8 |

| | | | | | | |
|---|---|---|---|---|---|---|
| *) Vergleichsbeispiel | | | | | | |

Gegenüber der reinen Polyvinylacetat-Dispersion gemäß Vergleichsbeispiel 20 zeigen die erfindungsgemäßen Polymer-Dispersionen eine deutlich kürzere Filmbildungs- und Trocknungszeit.

**Tab. 11a : Zusammensetzung der Dispersionen Thermomechanische Eigenschaften**

| **Versuch** | **26*)** | **27** | **28** | **29*)** | **30** | **31** |
|---|---|---|---|---|---|---|
| PVAc Typ 1 | 100 | 100 | 100 | - | - | - |
| PVAc Typ 9 | - | - | - | 100 | 100 | 100 |
| Kieselsol Typ 1 | | 30 | | | 30 | |
| Kieselsol Typ 13 | | | 30 | | | 30 |

**Tab. 11b: Thermomechanische Eigenschaften**

| **Versuch** | **26*)** | **27** | **28** | **29*)** | **30** | **31** |
|---|---|---|---|---|---|---|
| Restliche Eindringtiefe des Messkopfes bei 100°C (in %) | 36 | 88 | 80 | 24 | 68 | 90 |

| | | | | | | |
|---|---|---|---|---|---|---|
| *) Vergleichsbeispiel | | | | | | |

Die restliche Eindringtiefe gibt die Tiefe an, die der Messkopf nicht eingedrungen ist.

Gegenüber der Verwendung der reinen Polyvinylacetat-Dispersionen gemäß Vergleichsbeispielen 26 und 29 zeigen die mit den erfindungsgemäßen Polymer-Dispersionen hergestellten Filme eine deutlich höhere Beständigkeit bei thermischer Belastung. Diese Eigenschaft korreliert mit der Wärmebeständigkeit der Polymerfilme. Den detaillierten Verlauf der einzelnen Messungen im Vergleich zeigt Abb. 2.

**Tab. 12a : Zusammensetzung der Dispersionen**

| **Versuch** | **32*)** | **33** | **34*)** | **35** |
|---|---|---|---|---|
| PVAc Typ 5 | 100 | 100 | 100 | 100 |
| Cyclodextrin Typ 10 | - | - | 10 | 10 |
| Kieselsol Typ 14 | | 30 | | 30 |

| | | | | |
|---|---|---|---|---|
| *) Vergleichsbeispiel | | | | |

**Tab. 12b : Thermomechanische Eigenschaften**

| **Versuch** | **32*)** | **33** | **34*)** | **35** |
|---|---|---|---|---|
| Restliche Eindringtiefe des Messkopfes bei 100°C (in %) | 7 | 66 | 26 | 80 |
| Eindringtiefe des Messkopfes von 50% bei einer Temperatur von: (°C) | 57 | 180 | 66 | 242 |
| Eindringtiefe des Messkopfes von 90% bei einer Temperatur von: (°C) | 94 | 260 | 126 | 265 |

| | | | | |
|---|---|---|---|---|
| *) Vergleichsbeispiel | | | | |

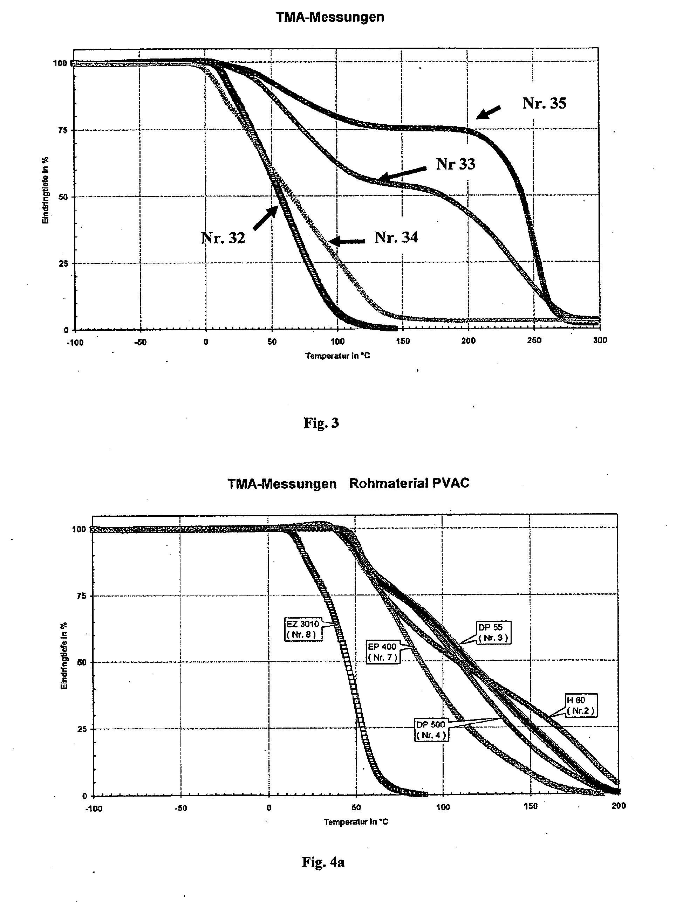

Gegenüber der Verwendung der reinen Polyvinylacetat-Dispersionen gemäß Vergleichsbeispielen 32 und 34 zeigen die mit den erfindungsgemäßen Polymer-Dispersionen hergestellten Filme eine deutlich höhere Beständigkeit bei thermischer Belastung. Diese Eigenschaft korreliert mit dem softening point und ist ein Maß für die Wärmebeständigkeit der Polymerfilme. Überraschend hohe Werte der Wärmebeständigkeit zeigten die Filme hergestellt aus der besonderen Ausführungsform der erfindungsgemäßen Polymer-Dispersion mit Cyclodextrinen (Versuch 35). Der beobachtete Effekt geht deutlich über einen rein additiven Effekt hinaus. Den detaillierten Verlauf der einzelnen Messwerte im Vergleich zeigt Fig. 3.

**Tab. 13a: Zusammensetzung der Dispersionen**

| **Versuch** | **36*)** | **37** | **38*)** | **39** | **40*)** | **41** | **42*)** | **43** | **44*)** | **45** |
|---|---|---|---|---|---|---|---|---|---|---|
| PVAc Typ 2 | 100 | 100 | | | | | | | | |
| PVAc Typ 3 | - | - | 100 | 100 | | | | | | |
| PVAc Typ 4 | | | | | 100 | 100 | | | | |
| PVAc Typ 7 | | | | | | | 100 | 100 | | |
| PVAc Typ 8 | | | | | | | | | 100 | 100 |
| Kieselsol Typ 13 | | 30 | | 30 | | 30 | | 30 | | 30 |

**Tab. 13b: Thermomechanische Eigenschaften**

| **Versuch** | **36*)** | **37** | **38*)** | **39** | **40*)** | **41** | **42*)** | **43** | **44*)** | **45** |
|---|---|---|---|---|---|---|---|---|---|---|
| Restliche Eindringtiefe bei 100°C(%) | 58 | 92 | 55 | 85 | 60 | 85 | 38 | 78 | 0 | 35 |

| | | | | | | | | | | |
|---|---|---|---|---|---|---|---|---|---|---|
| *) Vergleichsbeispiel | | | | | | | | | | |

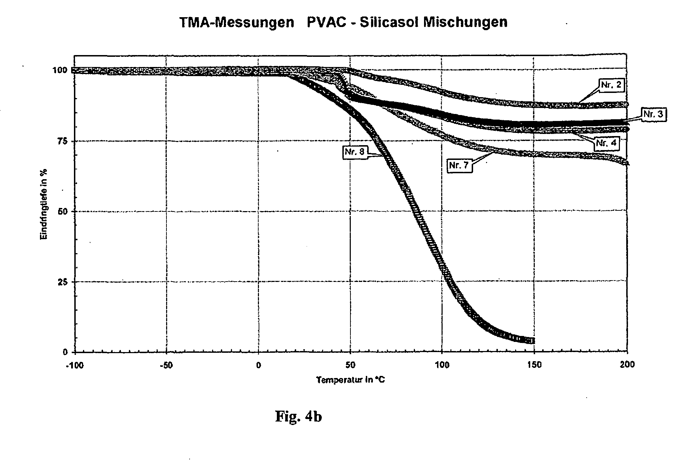

Gegenüber der Verwendung der reinen Polyvinylacetat-Dispersionen gemäß Vergleichsbeispielen 36, 38, 40, 42 und 44 zeigen die mit den erfindungsgemäßen Polymer-Dispersionen hergestellten Filme eine deutlich höhere Beständigkeit bei thermischer Belastung. Diese Eigenschaft korreliert mit dem softening point und ist ein Maß für die Wärmebeständigkeit der Polymerfilme. Den detaillierten Verlauf der einzelnen Messwerte im Vergleich zeigt Abb. 4.

**Abb. 2****:** Verlauf der Messungen der Beständigkeit bei thermischer Belastung von Filmen aus Dispersionen gemäß Tab. 11
Darin bedeutet: PVAc Nr. 1 = Versuch 26, PVAc Nr 9 = Versuch 29

**Abb. 3****:** Verlauf der Messungen der Beständigkeit bei thermischer Belastung von Filmen aus Dispersionen gemäß Tab. 12, Versuch 32 - 35 (erfindungsgemäß: Versuche 33 und 35)

**Abb. 4a**: Verlauf der Messungen der Beständigkeit bei thermischer Belastung von Filmen aus reinen PVAc-Dispersionen gemäß Tab. 1 und 2 (PVAc-Typen 2, 3, 4, 7, 8)

**Abb. 4b**: Verlauf der Messungen der Beständigkeit bei thermischer Belastung von Filmen aus den PVAc-Dispersionenstypen 2, 3, 4, 7 und 8 in Kombination mit Silicasol. Tab 11 Versuche 37, 39, 41,43,45

## Patentansprüche

1. Verwendung wässriger Polymer-Dispersionen als Klebstoffe,die
a) mindestens eine Dispersion enthaltend Polyvinylacetat und/oder wenigstens ein Polyvinylacetatcopolymer,
b) mindestens eine wässrige Siliciumdioxid-Dispersion die ein wässriges Kieselsol ist mit einem mittleren Partikel-durchmesser der SiO₂-Partike von 1 bis 400 nm, und
c) ein OH-gruppenhaltiges Oligomer oder Polymer enthält, **dadurch gekennzeichnet, dass** das oder die OH-gruppenhaltige(n) Oligomer(e) oder Polymer(e) ein oder mehrere Hydroxylacrylat(e), Hydroxylalkylcellulose(n), hydroxylgruppenhaltige Polychloroprene, und/oder Cyclodextrine sind (ist), worin der Gesamtanteil der dispergierten Polymeren (a) und (c) bei 55 bis 96 Gew% liegt und der der Siliciumdioxid-Dispersion (b) bei 4 bis 20 Gew%, wobei sich die Prozentangaben auf das Gewicht nicht flüchtiger Anteile beziehen und zu 100 Gew% addieren.

2. Verwendung gemäss Anspruch 1, **dadurch gekennzeichnet, dass** die PolymerDispersionen als Klebstoffe in der Buchbinderei, bei der Holzverklebung, oder als Fliesenkleber eingesetzt werden.

3. Verwendung gemäss Anspruch 1 oder 2, **dadurch gekennzeichnet, dass** die SiO₂ Partikel Primärpartikelgrößen von 5 bis 100 nm aufweisen.

4. Verwendung gemäss wenigstens einem der Ansprüche 1 bis 3, **dadurch gekennzeichnet, dass** die SiO₂-Partikel als diskrete unvernetzte Primärpartikel vorliegen.

5. Verwendung gemäss wenigstens einem der Ansprüche 1 bis 4, **dadurch gekennzeichnet, dass** die Polyvinylacetat- und/oder Polyvinylacetatcopolymer-Partikel einen mittleren Partikeldurchmesser von 70 bis 300 nm aufweisen.

6. Verwendung gemäss wenigstens einem der Ansprüche 1 bis 5, **dadurch gekennzeichnet, dass** das oder die OH-gruppenhaltige(n) Oligomer(e) oder Polymer(e) ein oder mehrere Hydroxylalkylcellulose(n) und/oder Cyclodextrine sind (ist).

7. Verwendung gemäss wenigstens einem der Ansprüche 1 bis 6, **dadurch gekennzeichnet, dass** das oder die OH-gruppenhaltige(n) Oligomer(e) oder Polymer(e) ein oder mehrere Cyclodextrine sind (ist).

8. Substrate, **dadurch gekennzeichnet, dass** sie mit einer Polymerdispersionen gemäss wenigstens einem der Anspruch 1 bis 7 verklebt sind.

## Claims

1. Use of aqueous polymer dispersions as adhesives, which contains
a) at least one dispersion containing polyvinylacetate and/or at least one polyvinylacetate copolymer,
b) at least one aqueous silica dispersion which is an aqueous silica sol with an average particle diameter of the SiO₂ particles of 1 to 400 nm, and
c) an OH-group-containing oligomer or polymer, **characterised in that** the OH-group-containing oligomer(s) or polymer(s) is/are one or several hydroxylacrylate(s), hydroxylalkyl cellulose(s), hydroxyl group-containing polychloroprenes, and/or cyclodextrins, with the total share of dispersed polymers (a) and (c) being at 55 to 96 wt% and that of silica dispersion (b) being at 4 to 20 wt%, with the percentages being based on the weight of non-volatile parts and adding up to 100 wt%.

2. Use according to claim 1, **characterised in that** the polymer dispersions are used as adhesives in book binding, in wood gluing, or as ceramic tile adhesives.

3. Use according to claim 1 or 2, **characterised in that** the SiO₂ particles have a primary particle size of 5 to 100 nm.

4. Use according to at least one of claims 1 to 3, **characterised in that** the SiO₂ particles are present as discrete uncrosslinked primary particles.

5. Use according to at least one of claims 1 to 4, **characterised in that** the polyvinylacetate and/or polyvinylacetate copolymer particles have an average particle diameter of 70 to 300 nm.

6. Use according to at least one of claims 1 to 5, **characterised in that** the OH-group-containing oligomer(s) or polymer(s) is/are one or several hydroxylalkyl cellulose(s) and/or cyclodextrins.

7. Use according to at least one of claims 1 to 6, **characterised in that** the OH-group-containing oligomer(s) or polymer(s) is/are one or several cyclodextrins.

8. Substrates, **characterised in that** they are stuck together with a polymer dispersions according to at least one of claims 1 to 7.

## Revendications

1. Utilisation de dispersions aqueuses de polymère comme adhésif, qui contiens
a) au moins une dispersion contenant de l'acétate de polyvinyle et/ou au moins un copolymère d'acétate de polyvinyle,
b) au moins une dispersion aqueuse de dioxyde de silicium qui est un gel aqueux de silice présentant un diamètre particulaire moyen de particules de SiO₂ de 1 à 400 nm, et
c) un oligomère ou polymère contenant un groupe OH, **caractérisé en ce que** le ou les oligomère(s) ou polymère(s) contenant un groupe OH est/sont un(e) ou plusieurs hydroxyacrylate(s), hydroxyalkylcellulose(s), polychloroprène(s) contenant un groupe hydroxyle et/ou cyclodextrine(s), la proportion totale de polymères dispersés (a) et (c) étant de 55 à 98 % en poids et celle de la dispersion de dioxyde de silicium (b) de 4 à 20 % en poids, les pourcentages en poids se rapportant à des proportions non-volatiles, et s'additionnant pour donner 100 % en poids.

2. Utilisation selon la revendication 1, **caractérisée en ce que** les dispersions de polymère sont utilisées comme adhésifs en reliure, dans le collage du bois ou comme adhésif de carrelage.

3. Utilisation selon la revendication 1 ou 2, **caractérisée en ce que** les tailles particulaires primaires des particules de SiO₂ représentent 5 à 100 nm.

4. Utilisation selon au moins l'une des revendications 1 à 3, **caractérisée en ce que** les particules de SiO₂ se présentent sous forme de particules primaires non réticulées discrètes.

5. Utilisation selon au moins l'une des revendications 1 à 4, **caractérisée en ce que** les particules d'acétate de polyvinyle et/ou de copolymères d'acétate de polyvinyle présentent un diamètre particulaire moyen de 70 à 300 nm.

6. Utilisation selon au moins l'une des revendications 1 à 5, **caractérisée en ce que** le ou les oligomère(s) ou polymère(s) contenant un groupe OH est/sont une ou plusieurs hydroxyalkylcellulose(s) et/ou cyclodextrine(s).

7. Utilisation selon au moins l'une des revendications 1 à 6, **caractérisée en ce que** le ou les oligomère(s) ou polymère(s) contenant un groupe OH est/sont une ou plusieurs cyclodextrine(s).

8. Substrats, **caractérisés en ce qu'**ils sont collés avec une dispersions de polymère selon au moins l'une des revendications 1 à 7.
